# EUROPÄISCHE PATENTSCHRIFT

(11) **EP 2 916 530 B1**
(45) Veröffentlichungstag und Bekanntmachung des Hinweises auf die Patenterteilung: **25.07.2018**
(21) Anmeldenummer: 14157749.4
(22) Anmeldetag: 05.03.2014
(51) Int. Cl.: H04M 3/42, H04M 3/51

(54) **Verfahren zum Steuern der Aufzeichnung von Kommunikationsdaten**
Method for controlling the recording of communication data
Procédé de commande de l'enregistrement de données de communication

(43) Veröffentlichungstag der Anmeldung: 09.09.2015
(73) Patentinhaber: ASC telecom AG, 63764 Hösbach (DE)
(72) Erfinder: Schmitt, Peter, 63877 Sailauf (DE); Rösel, Ralf, 63776 Mömbris (DE)
(74) Vertreter: Keil & Schaafhausen Patent- und Rechtsanwälte PartGmbB

(56) Entgegenhaltungen:
- EP-A2- 1 096 767
- US-A1- 2006 136 209
- US-B1- 7 043 008

## Beschreibung

Die Erfindung betrifft ein Verfahren zum Steuern der Aufzeichnung von Kommunikationsdaten, bei dem in mindestens einem Überprüfungsschritt mindestens ein Parameter eines Kommunikationssignals überprüft und in Abhängigkeit vom Ergebnis der Überprüfung in einem Signalerzeugungsschritt ein Aufzeichnungssignal erzeugt wird.

Ein derartiges Verfahren ist aus EP 1 096 767 A2 oder US 7 043 008 B1 bekannt.

Die Erfindung wird im Folgenden anhand von Telefongesprächen beschrieben. Sie ist aber auch bei anderen Kommunikationsdaten anwendbar, beispielsweise bei Signalströmen, die Videoinformationen enthalten, SMS, den Inhalt von Chatnachrichten, Inhalt von Instant Messaging- oder Social Media Nachrichten oder dergleichen.

So werden beispielsweise in einem Callcenter bestimmte Telefongespräche aufgezeichnet. Die Steuerung, nach welchen Kriterien die Telefongespräche aufgezeichnet werden, erfolgt nach einem vorgegebenen Schema, bei dem entweder eine Bedingung erfüllt oder mehrere Bedingungen kumulativ erfüllt werden müssen. So kann man beispielsweise abprüfen, ob es sich um ein eingehendes Telefonat handelt, bei dem eine Mindestgesprächsdauer überschritten und eine Höchstgesprächsdauer unterschritten wird.

Allerdings ist eine derartige Prüfstruktur, also die Abfolge der Überprüfungsschritte, wenig flexibel. Auch lässt sich die Auswahl der Telefonate, die aufgezeichnet werden sollen, nur relativ grob steuern.

Der Erfindung liegt die Aufgabe zugrunde, das Steuern der Aufzeichnung von Kommunikationsdaten komfortabel zu gestalten.

Diese Aufgabe wird bei einem Verfahren der eingangs genannten Art dadurch gelöst, dass mehrere Überprüfungsschritte vorgesehen sind, die in einer Baumstruktur abgearbeitet werden.

Bei einer Baumstruktur wird eine Überprüfung eines Parameters in Abhängigkeit von einer vorangegangenen Überprüfung eines anderen Parameters vorgenommen. Dabei können in Abhängigkeit vom Ergebnis der Überprüfung im vorangegangenen Überprüfungsschritt im nachfolgenden Überprüfungsschritt durchaus unterschiedliche Parameter überprüft werden. Dadurch erhält man eine große Wahlfreiheit und Flexibilität, d.h. man kann auf einfache Weise eine Vielzahl von Parametern in einem einzigen Durchgang überprüfen, ohne dass man mehrmals eine Prüfroutine durchlaufen muss.

Beim Abarbeiten folgt auf einen Überprüfungsschritt entweder ein weiterer Überprüfungsschritt oder ein Signalerzeugungsschritt. Wenn die Überprüfung eines Parameters ein vorbestimmtes Ergebnis ergeben hat, dann kann auf einen Überprüfungsschritt ein weiterer Überprüfungsschritt folgen. Wenn hingegen nach Abarbeiten des ersten Überprüfungsschritts klar ist, dass eine Aufzeichnung erfolgen oder nicht erfolgen soll, dann kann der Signalerzeugungsschritt unmittelbar folgen. Der Signalerzeugungsschritt stellt dann das Ende eines Astes des Baumes dar.

In einem Vorbereitungsabschnitt ist die Reihenfolge der Überprüfungsschritte durch einen Benutzer veränderbar. Das System lässt sich dann leicht an die Bedürfnisse eines Benutzers anpassen. Der Benutzer kann bei dieser Anpassung durchaus auch Erfahrungswerte einfließen lassen. So ist beispielsweise bei einem Benutzer ein wesentliches Kriterium, ob die Dauer der Telefongespräche in einem bestimmten Bereich liegt. Dementsprechend wird man in diesem Fall die Dauer der Telefongespräche in einem ersten Überprüfungsschritt abprüfen. Bei einem anderen Benutzer kann es wesentlich sein, ob es sich um eingehende oder ausgehende Anrufe handelt. Dementsprechend wird man in diesem Fall dieses Kriterium als erstes abprüfen. Insgesamt lässt sich dadurch der Prüfaufwand verringern und die Prüfung in kürzerer Zeit durchführen.

Vorzugsweise ist in dem Vorbereitungsabschnitt die Abfolge von Überprüfungsschritten und Signalerzeugungsabschnitten durch den Benutzer veränderbar. Der Benutzer kann dann festlegen, welches Signal bei einem bestimmten Ergebnis erzeugt werden soll. Auch dies erhöht die Flexibilität des Verfahrens ganz erheblich.

Vorzugsweise werden zumindest in dem Vorbereitungsabschnitt die Reihenfolge der Überprüfungsschritte und die Signalerzeugungsschritte grafisch dargestellt. Diese grafische Darstellung kann beispielsweise in Textform erfolgen, wobei die einzelnen Äste der Baumstruktur durch Einrückungen oder dergleichen gekennzeichnet werden. Es ist aber auch möglich, die Baumstruktur durch entsprechende Diagramme zu visualisieren.

Vorzugsweise wird im Vorbereitungsschritt mindestens eine vorbereitete Folge von Überprüfungsschritten und Signalerzeugungsschritten bereitgehalten und der Benutzer platziert die vorbereitete Folge in der Baumstruktur. Damit kann man den Entscheidungsbaum auch kaskadieren, d.h. man kann vorbereitete Folgen von Überprüfungs- und Signalerzeugungsschritten sozusagen als Module verwenden, die man dann anstelle eines Überprüfungs- oder Signalerzeugungsschritts in die Baumstruktur einbinden kann. Dies erleichtert die Vorbereitung der Signalüberwachung.

Bevorzugterweise erzeugt der Signalerzeugungsschritt zumindest die folgenden Signale: "Aufzeichnung", "Nicht aufzeichnen", "Aufzeichnen mit Löschmöglichkeit" und "Nicht aufzeichnen mit Aufzeichnungsmöglichkeit". Beim Signal "Aufzeichnen" werden die entsprechenden Kommunikationsdaten aufgezeichnet. Beim Signal "Nicht aufzeichnen" werden die Kommunikationsdaten nicht aufgezeichnet. Beim Signal "Aufzeichnen mit Löschmöglichkeit" werden die Kommunikationsdaten aufgezeichnet, aber am Ende gelöscht. Dieses Löschen kann durch externe Aufzeichnungssteuerungen verhindert werden, indem eine explizite Entscheidung getroffen wird, die Aufzeichnung zu behalten. Hierzu kann ein Benutzer beispielsweise eine Taste betätigen. Beim Signal "Nicht aufzeichnen mit Aufzeichnungsmöglichkeit" wird das Gespräch nicht aufgezeichnet. Externe Befehle können aber eine Aufzeichnung starten, wobei die Aufzeichnung natürlich erst ab dem Zeitpunkt des Befehls ausgeführt werden kann.

Die Erfindung wird im Folgenden anhand eines bevorzugten Ausführungsbeispiels in Verbindung mit der Zeichnung beschrieben. Hierin zeigen:
- Fig. 1: eine grafische Darstellung einer Steuerung der Aufzeichnung von Kommunikationsdaten in einer ersten Version,
- Fig. 2: eine grafische Darstellung der Steuerung der Aufzeichnung von Kommunikationsdaten in einer zweiten Ausgestaltung und
- Fig. 3: eine grafische Darstellung der Steuerung der Aufzeichnung von Kommunikationsdaten in einer dritten Ausgestaltung.

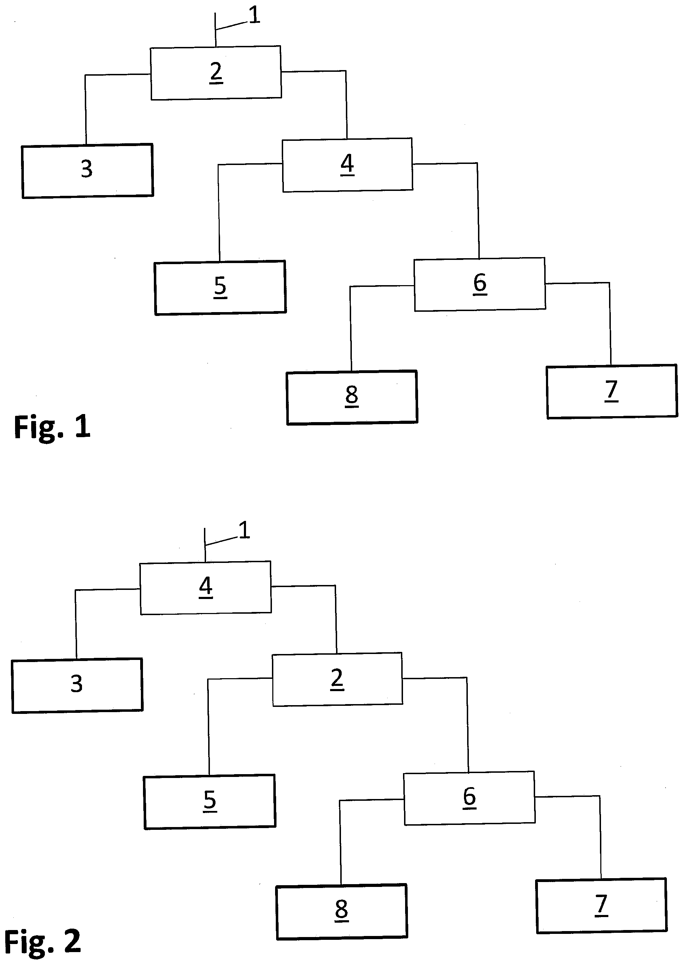

Fig. 1 zeigt eine schematische Darstellung zur Erläuterung des Verfahrens zum Steuern der Aufzeichnung von Kommunikationsdaten, die in einem Kommunikationsdatenstrom 1 einer Überprüfungseinrichtung 2 zugeführt werden. Die Überprüfungseinrichtung 2 überprüft beispielsweise, ob der Datenstrom ein eingehender Datenstrom oder ein ausgehender Datenstrom ist. Die Überprüfungseinrichtung 2 realisiert also anhand des technischen Parameters "Signalrichtung" einen Überprüfungsschritt. In Abhängigkeit vom Ergebnis des Überprüfungsschritts wird in einem Signalerzeugungsschritt ein Aufzeichnungssignal erzeugt. Wenn in der Überprüfungseinrichtung 2 beispielsweise festgestellt wird, dass es sich nicht um einen eingehenden Datenstrom handelt, dann wird ein Aufzeichnungssignal 3 "Nicht aufzeichnen" erzeugt. Dies bedeutet, dass der Kommunikationsdatenstrom, beispielsweise ein Telefonat mit Inhalt und Metadaten, nicht aufgezeichnet wird.

Sollte sich hingegen ergeben, dass es sich um einen eingehenden Kommunikationsdatenstrom handelt, dann wird in einer weiteren Überprüfungseinrichtung 4 die Dauer des Telefonats überprüft. Diese Überprüfung kann auf eine minimale Dauer oder auf eine maximale Dauer oder auf beides ausgelegt sein. Im vorliegenden Fall wird überprüft, ob das Telefongespräch zwischen einer und zehn Minuten dauert. Wenn dies nicht der Fall ist, wird in einem Signalerzeugungsschritt 5 ein Aufzeichnungssignal "Aufzeichnen mit Löschmöglichkeit" erzeugt, d.h. das Telefonat wird aufgezeichnet, aber am Ende gelöscht. Das Löschen kann durch eine externe Aufzeichnungssteuerung verhindert werden, indem eine explizite Entscheidung getroffen wird, die Aufzeichnung zu behalten. In diesem Fall kann beispielsweise die Person, die das Telefonat entgegennimmt, eine Taste betätigen oder auf sonstige Weise ein Signal auslösen, so dass das Telefonat nicht gelöscht wird.

Wird hingegen in der Überprüfungseinrichtung 4 festgestellt, dass die Dauer des Telefonats in einem vorgegebenen Bereich liegt, dann wird in einer weiteren Überprüfungseinrichtung 6 festgestellt, ob die Telefonnummer, von der das Telefonat stammt, zu einer vorgegebenen Telefonnummer gehört oder nicht. Wenn dies nicht der Fall ist, wird in einem Signalerzeugungsschritt 7 ein Signal "Aufzeichnen" erzeugt, d.h. das Telefonat wird aufgezeichnet und zwar mit Kommunikationsdaten, die das Gespräch wiedergeben, und mit Kommunikationsdaten, die die Metadaten des Telefongesprächs wiedergeben.

Sollte die Überprüfung der Telefonnummer ergeben, dass die Anrufe der Telefonnummer nicht zu dem vorbestimmten Telefonnummernvorrat gehören, dann wird in einem Signalerzeugungsschritt 8 ein Signal "Nicht aufzeichnen mit Aufzeichnungsmöglichkeit" erzeugt, d.h. das Telefongespräch wird nicht aufgezeichnet. Externe Befehle können aber eine Aufzeichnung starten und zwar zu dem Zeitpunkt, wo die externen Befehle ausgeführt werden.

Das Aufzeichnungssignal 7 "Aufzeichnen" kann auch modifiziert sein, so dass beispielsweise das Telefonat aufgezeichnet wird, eine Hintergrundmusik jedoch unterdrückt wird.

Fig. 2 zeigt eine schematische Darstellung eines abgewandelten Verfahrens zum Steuern der Aufzeichnung. Hier ist die Überprüfungseinrichtung 4 an die erste Stelle gesetzt worden, d.h. der Kommunikationsdatenstrom 1, beispielsweise die Daten eines Telefonats, werden auf ihre Dauer hin überprüft. Bei einer Gesprächsdauer außerhalb des vorgegebenen Zeitbereichs wird das Gespräch nicht aufgezeichnet. Nur wenn das Telefongespräch in einem vorbestimmten Gesprächsdauerbereich liegt, beispielsweise länger als eine Minute und kürzer als zehn Minuten ist, dann wird in der Überprüfungseinrichtung 2 überprüft, ob es sich um ein eingehendes oder um ein ausgehendes Telefonat handelt. Die Ergebnisse der Überprüfungen sind die gleichen, wie bei der Ausgestaltung nach Fig. 1. Der einzige Unterschied liegt darin, dass zuerst die Dauer und dann die Richtung der Telefonate überprüft werden. Wenn beide Kriterien erfüllt sind, wird im Überprüfungsschritt 6 zusätzlich überprüft, ob die rufende Telefonnummer zu dem vorbestimmten Rufnummernvorrat gehört.

Ein Benutzer kann in einem Vorbereitungsabschnitt die Reihenfolge der Überprüfungsschritte verändern. Wie ein Vergleich der Fig. 1 und 2 zeigt, ist es ohne weiteres möglich, zuerst die Richtung des Telefonats zu überprüfen und dann die Dauer oder zuerst die Dauer und dann die Richtung.

Natürlich ist es auch möglich, die entsprechenden Signalerzeugungsschritte frei zu wählen und den jeweiligen Überprüfungsschritten zuzuordnen. So kann man beispielsweise in Fig. 2 die Schritte 3 und 5 vertauschen, so dass dann, wenn das Telefonat eine Dauer hat, die nicht in einen vorbestimmten Bereich fällt, das Gespräch nicht aufgezeichnet wird und man bei der Überprüfung der Frage, ob es sich um ein eingehendes oder um ein ausgehendes Telefonat handelt, die Möglichkeit hat, das Signal "Aufzeichnen mit Löschmöglichkeit" zu wählen.

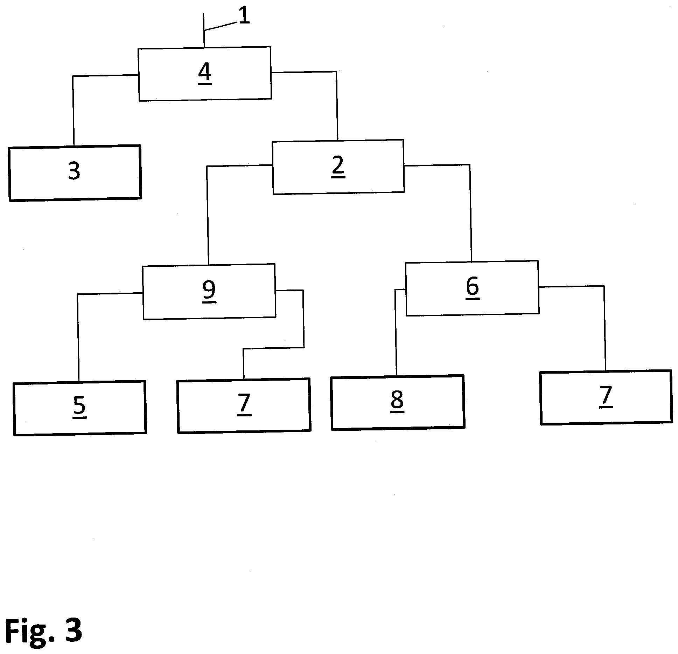

Fig. 3 zeigt eine weitere schematische Darstellung, die in wesentlichen Teilen denjenigen der Fig. 2 entspricht.

Allerdings schließt sich an den Überprüfungsschritt in der Überprüfungseinrichtung 2, die die Signalrichtung abprüft, in beiden Fällen ein weiterer Prüfungsschritt an. Sollte es sich um ein eingehendes Signal handeln, wird in der Überprüfungseinrichtung 6 überprüft, ob die rufende Nummer zu einem vorgegebenen Rufnummernvorrat gehört oder nicht. Sollte sie zu dem Rufnummernvorrat gehören, dann wird das Signal aufgezeichnet (Aufzeichnungssignal 7). Sollte die Rufnummer nicht zu dem vorgegebenen Rufnummernvorrat gehören, wird das Gespräch nicht aufgezeichnet, jedoch wird eine Aufzeichnungsmöglichkeit bereitgehalten (Signalerzeugungsschritt 8).

Sollte die Überprüfung in der Überprüfungseinrichtung 2 ergeben, dass es sich um ein ausgehendes Telefonat handelt, wird in einer Überprüfungseinrichtung 9 die Quelle des Telefonats abgeprüft, beispielsweise kann man prüfen, ob das ausgehende Telefonat von einem vorbestimmten Arbeitsplatz oder mit einer vorbestimmten Nutzerkennung geführt wird. Sollte dies der Fall sein, dann wird das Gespräch aufgezeichnet (Aufzeichnungssignal 7). Sollte dies nicht der Fall sein, wird das Gespräch ebenfalls aufgezeichnet, aber gelöscht, sofern die Löschung nicht durch eine externe Aufzeichnungssteuerung verhindert wird (Signalerzeugungsschritt 5).

Vereinfacht ausgedrückt umfasst das Verfahren eine Reihe von Überprüfungsschritten und eine Reihe von Signalerzeugungsschritten. Die Signalerzeugungsschritte sind mit etwas dickeren Linien dargestellt.

Man kann ohne weiteres erkennen, dass auf einen Überprüfungsschritt entweder eine weiterer Überprüfungsschritt oder ein Signalerzeugungsschritt folgt.

In nicht näher dargestellter Weise kann man in der Baumstruktur auch vorbereitete Module, also eine vorbestimmte Abfolge von Überprüfungs- und Signalerzeugungsschritten verwenden. Ein derartiges Modul kann sozusagen einen eigenen "Entscheidungsbaum" bilden. Unter der Verwendung von einem oder mehreren Modulen kann man dann die Entscheidungsbäume kaskadieren. Dies ist in vielen Fällen für den Benutzer eine hilfreiche Maßnahme, weil er nicht jede Abfolge von Überprüfungs- und Signalerzeugungsschritten selbst erzeugen muss, sondern bewährte Folgen sozusagen wieder verwenden kann.

Dargestellt ist lediglich eine schematische Ansicht. Es liegt auf der Hand, dass man zusätzlich zu den drei beschriebenen Überprüfungsschritten eine Reihe von weiteren Überprüfungsschritten verwenden kann. Hierzu wird zweckmäßigerweise ein Parametervorrat angeboten, aus dem ein Benutzer in dem Vorbereitungsabschnitt die passenden Parameter heraussuchen kann. Er kann dann bei jedem Parameter eine Ja-/Nein-Entscheidung treffen lassen, d.h. ein Parameter ist vorhanden oder er ist nicht vorhanden. In Abhängigkeit von dem Ergebnis der Überprüfung wird dann ein weiterer Überprüfungsschritt oder ein Signalerzeugungsschritt durchgeführt. Mit einem Signalerzeugungsschritt ist das Verfahren zum Steuern der Aufzeichnung von Kommunikationsdaten abgeschlossen.

Als Parameter stehen beispielsweise zur Auswahl: die rufende Nummer, die Gesprächsrichtung, eine Netzwerkadresse, eine Dauer, eine Tageszeit, eine Identifizierung des das Gespräch annehmenden Arbeitsplatzes, eine Identifizierung einer bestimmten Gruppe von Arbeitsplätzen, die das Gespräch entgegennehmen, oder eine Zufallszahl, die beispielsweise durch einen Zufallsgenerator erzeugt werden kann.

## Patentansprüche

1. Verfahren zum Steuern der Aufzeichnung von Kommunikationsdaten, bei dem in mindestens einem Überprüfungsschritt (2, 4, 6) mindestens ein Parameter eines Kommunikationssignals (1) überprüft und in Abhängigkeit vom Ergebnis der Überprüfung in einem Signalerzeugungsschritt (3, 5, 7, 8) ein Aufzeichnungssignal erzeugt wird, **dadurch gekennzeichnet, dass** mehrere Überprüfungsschritte (2, 4, 6) vorgesehen sind, die in einer Baumstruktur abgearbeitet werden, wobei beim Abarbeiten auf einen Überprüfungsschritt (2, 4) entweder ein weiterer Überprüfungsschritt (4, 6) oder ein Signalerzeugungsschritt (3, 5, 7, 8) folgt und in einem Vorbereitungsabschnitt die Reihenfolge der Überprüfungsschritte (2, 4, 6) durch einen Benutzer veränderbar ist.

2. Verfahren nach Anspruch 1, **dadurch gekennzeichnet, dass** in dem Vorbereitungsabschnitt die Abfolge von Überprüfungsschritten (2, 4, 6) und Signalerzeugungsschritt (3, 5, 7, 8) durch den Benutzer veränderbar ist.

3. Verfahren nach Anspruch 1 oder 2, **dadurch gekennzeichnet, dass** zumindest in dem Vorbereitungsabschnitt die Reihenfolge der Überprüfungsschritte (2, 4, 6) und die Signalerzeugungsschritte (3, 5, 7, 8) grafisch dargestellt werden.

4. Verfahren nach einem der Ansprüche 1 bis 3, **dadurch gekennzeichnet, dass** im Vorbereitungsschritt mindestens eine vorbereitete Folge von Überprüfungsschritten und Signalerzeugungsschritten bereitgehalten wird und der Benutzer die vorbereitete Folge in der Baumstruktur anordnet.

5. Verfahren nach einem der Ansprüche 1 bis 4, **dadurch gekennzeichnet, dass** der Signalerzeugungsschritt (3, 5, 7, 8) zumindest die folgenden Signale erzeugt: "Aufzeichnen", "Nicht Aufzeichnen", "Aufzeichnen mit Löschmöglichkeit" und "Nicht Aufzeichnen mit Aufzeichnungsmöglichkeit".

## Claims

1. Method for controlling the recording of communication data, in which in at least one checking step (2, 4, 6), at least one parameter of a communication signal (1) is checked and, in a signal generating step (3, 5, 7, 8), a recording signal is generated on the basis of the result of the check, **characterised in that** there is a plurality of checking steps (2, 4, 6), which steps are executed in a tree structure, either a further checking step (4, 6) or a signal generating step (3, 5, 7, 8) following on therefrom when a checking step (2, 4) is executed and it being possible for a user to change the order of the checking steps (2, 4, 6) in a preparation stage.

2. Method according to claim 1, **characterised in that** in the preparation stage, the sequence of checking steps (2, 4, 6) and the signal generating step (3, 5, 7, 8) can be changed by the user.

3. Method according to either claim 1 or claim 2, **characterised in that** at least in the preparation stage, the order of the checking steps (2, 4, 6) and the signal generating steps (3, 5, 7, 8) are represented by a graph.

4. Method according to any of claims 1 to 3, **characterised in that** in the preparation step, at least one prepared sequence of checking steps and signal generating steps is available and the user arranges the prepared sequence in the tree structure.

5. Method according to any of claims 1 to 4, **characterised in that** the signal generating step (3, 5, 7, 8) generates at least the following signals: "record", "do not record", "record with erase function" and "do not record with record function".

## Revendications

1. Procédé de commande de l'enregistrement de données de communication, selon lequel dans au moins une étape de vérification (2, 4, 6) au moins un paramètre d'un signal de communications (1) est vérifié et en fonction du résultat de la vérification dans une étape de génération de signaux (3, 5, 7, 8) est généré un signal d'enregistrement, **caractérisé en ce que** plusieurs étapes de vérification (2, 4, 6) sont prévues qui sont exécutées dans une structure arborescente, dans lequel, lors de l'exécution, une étape de vérification (2, 4) est suivie soit par une autre étape de vérification (4, 6), soit par une étape de génération de signaux (3, 5, 7, 8) et, dans une période de préparation, l'ordre des étapes de vérification (2, 4, 6) peut être modifié par un utilisateur.

2. Procédé selon la revendication 1, **caractérisé en ce que**, dans la période de préparation, la séquence d'étapes de vérification (2, 4, 6) et d'étape de génération de signaux (3, 5, 7, 8) peut être modifiée par un utilisateur.

3. Procédé selon la revendication 1 ou 2, **caractérisé en ce que**, au moins dans la période de préparation, l'ordre des étapes de vérification (2, 4, 6) et les étapes de génération de signaux (3, 5, 7, 8) sont représentées graphiquement.

4. Procédé selon l'une quelconque des revendications 1 à 3, **caractérisé en ce que**, dans la période de préparation, au moins une suite préparée d'étapes de vérification et d'étapes de génération de signaux est mise à disposition et l'utilisateur arrange la suite préparée dans la structure arborescente.

5. Procédé selon l'une quelconque des revendications 1 à 4, **caractérisé en ce que** l'étape de génération de signaux (3, 5, 7, 8) génère au moins les signaux suivants : « Enregistrer », « Ne pas enregistrer », « Enregistrer avec possibilité d'effacement » et « Ne pas enregistrer avec possibilité d'enregistrement ».
